# EUROPEAN PATENT SPECIFICATION

(11) **EP 4 005 153 B1**
(45) Date of publication and mention of the grant of the patent: **04.12.2024**
(21) Application number: 19748489.2
(22) Date of filing: 25.07.2019
(51) Int. Cl.: H04L 41/04, H04L 41/342, H04L 45/302, H04L 47/80, H04W 76/12, H04W 76/11, H04W 28/24

(54) **CONNECTING NETWORK AGNOSTIC DEVICES**
VERBINDEN VON NETZWERK-AGNOSTISCHEN VORRICHTUNGEN
CONNEXION DE DISPOSITIFS INDÉPENDANTS DU RÉSEAU

(43) Date of publication of application: 01.06.2022
(73) Proprietor: Telefonaktiebolaget LM Ericsson (publ), 164 83 Stockholm (SE)
(72) Inventor: MEHLER, Klaus, 52511 Geilenkirchen (DE); WILKE, Johannes, 52379 Langerwehe (DE)
(74) Representative: Ericsson
(86) International application number: PCT/EP2019/070025
(87) International publication number: WO 2021/013351

(56) References cited:
- EP-A1- 3 255 865
- EP-A2- 1 241 911
- YUWEI XIE ET AL: "Unified Scheduling for Predictable Communication Reliability in Cellular Networks with D2D Links", ARXIV.ORG, CORNELL UNIVERSITY LIBRARY, 201 OLIN LIBRARY CORNELL UNIVERSITY ITHACA, NY 14853, 2 July 2018 (2018-07-02), XP081242910

## Description

### Technical Field

The present application relates to a method for operating a connectivity orchestration entity and to the corresponding connectivity orchestration entity. Furthermore, a method for operating a device gateway is provided together with the corresponding device gateway. Further, a computer program and a carrier comprising the computer program are provided and a system comprising the device gateway and the connectivity orchestration entity.

### Background

3GPP networks or cellular networks in general are expected to offer connectivity for billions of devices to applications. In the present context a device is a machine, for example a sensor or a robot, that is used for sending or receiving data to and from applications or other devices. The devices act upon the data received by the applications. An application in the present context is a piece of software designed to fulfil a particular purpose, such as a software to control the sensor etc. The applications communicate with the devices to process the received data and/or to send information controlling one or multiple devices.

Through the cellular networks the devices can either be connected to applications as a UE (User Equipment) or via a gateway that acts as a UE.

While the devices are typically agnostic to the mechanisms used in the cellular network, most industrial application-to-device communication use cases put specific requirements on the connectivity, by way of example on the bandwidth, the latency, jitter, etc.

Devices without the UE functionality of the cellular network cannot trigger the reservation of dedicated resources in the cellular network, which is, however, necessary for certain use cases. This restricts the type of devices that can benefit from the network connectivity.

Document YUWEI XIE ET AL: "Unified Scheduling for Predictable Communication Reliability in Cellular Networks with D2D Links",ARXIV.ORG discloses a method for unified cellular scheduling which is responsible for the scheduling through the network and for the device-to-device transmission in which the two devices directly communicate with each other. Summary

Accordingly, a need exists to be able to more easily use network agnostic devices in a device application communication that occurs via a cellular network.

This need is met by the features of the independent claims. Further aspects are described in the dependent claims.

### Brief Description of the Drawings

The foregoing and additional features and effects of the application will become apparent from the following detailed description when read in conjunction with the accompanying drawings, in which like reference numerals refer to like elements.
Fig. 1 shows a schematic architectural view of a system in which a connectivity orchestration entity orchestrates the connectivity of several network agnostic devices to applications through a cellular network.
Fig. 2 shows a schematic message exchange of how the connectivity orchestration entity is informed of the required QoS requirements of a data packed connection between a device and its application.
Fig. 3 shows a schematic view of a message exchange between the involved entities how the connectivity orchestration entity is informed of the address information.
Fig. 4 shows a schematic view of a message exchange between the involved entities how the connectivity orchestration entity is informed of the application with which the device is exchanging data.
Fig. 5 shows a schematic view of a message exchange between the involved entities in which a device gateway connects to the cellular network and provides the connectivity information to the connectivity orchestration entity.
Fig. 6 shows a schematic view of a message exchange between the involved entities how the data connection is established as orchestrated by the connectivity orchestration entity.
Fig. 7 shows a schematic view of a flowchart carried out at the connectivity orchestration entity when orchestrating the connectivity of the device to the corresponding application.
Fig. 8 shows a schematic view of a flowchart comprising some of the steps carried out by the device gateway in the process of generating a connection between the device gateway and the application.
Fig. 9 shows an example schematic representation of a connectivity orchestration entity configured to orchestrate the connectivity of devices to the cellular network.
Fig. 10 shows another example schematic representation of a connectivity orchestration entity configured to orchestrate the connectivity of devices to the cellular network.
Fig. 11 shows an example schematic representation of a device gateway setting up the connection of the device to the cellular network.
Fig. 12 shows another example schematic representation of the device gateway configured to set up the connection of the device to the cellular network.

### Detailed Description of the Drawings

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are to be illustrative only.

The drawings are to be regarded as being schematic representations, and elements illustrated in the drawings are not necessarily shown to scale. Rather, the various elements are represented such that theirfunction and general purpose becomes apparent to a person skilled in the art. Any connection or coupling between functional blocks, devices, components of physical or functional units shown in the drawings and described hereinafter may also be implemented by an indirect connection or coupling. A coupling between components may be established over a wired or wireless connection. Functional blocks may be implemented in hardware, software, firmware, or a combination thereof.

As will be discussed below, the invention enables the reservation of cellular network specific resources, such as EPS (Evolved Packet System) bearers, for the connection of network agnostic devices to the cellular networks. This can help to meet the connection characteristics specified by the different use cases occurring in the data connection between the device and the corresponding application. The connection characteristics, e.g. the Quality of Service requirements, can contain information such as the upper boundary of a latency, the lower boundary of a bandwidth, packet loss, jitter, etc. Hence, the devices can be agnostic to the cellular network functions, but can benefit from the network capabilities.

The devices connect to a device gateway that interfaces with a connectivity orchestration entity (or OT orchestrator (Operational Technology orchestrator)). The connectivity orchestration entity interfaces with the orchestration system of the cellular network. The device gateway and the connectivity orchestration entity implement the necessary functions to reserve the cellular network resources guaranteeing the required connectivity requirements or QoS parameters.

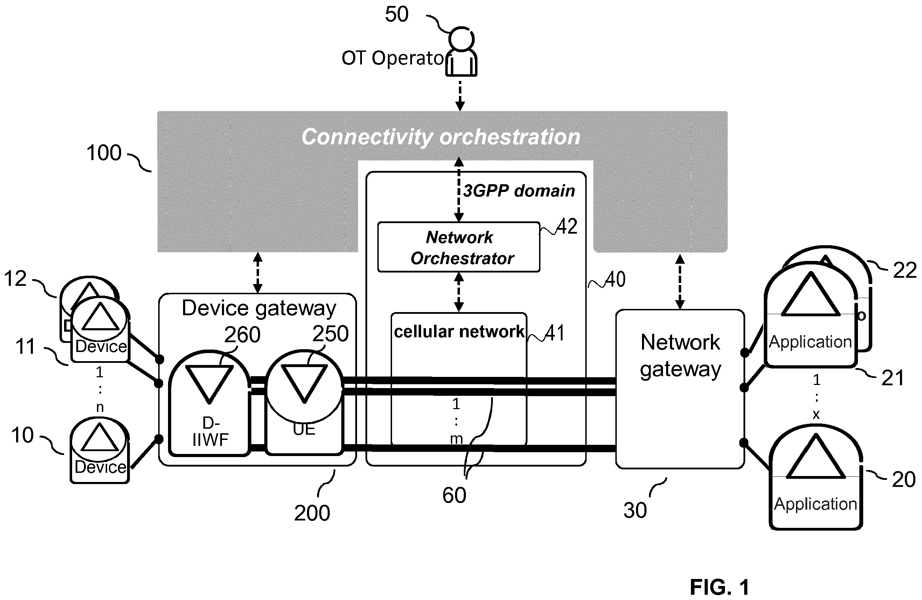

Fig. 1 shows a schematic architectural view of a system in which a connectivity orchestration entity 100 orchestrates a connectivity of several devices 10, 11 or 12 to the corresponding applications 20, 21 or 22 through a cellular network 41. The devices 10 to 12 connect to a device gateway 200 and the device gateway 200 interfaces with the cellular network 41 or the network domain 40 with the connectivity orchestration entity 100 as managing entity. On the cellular network side, the device gateway 200 encapsulates and decapsulates the L2 traffic based on instructions by the connectivity orchestration entity 100. This mechanism is known as tunneling. Examples for tunneling mechanisms are VxLAN, IPSec or GRE. Each tunnel has well-specified transmission characteristics to meet the use case requirements. The device gateway comprises a UE entity 250 for the functions needed for the communication with the cellular network domain 40 and an entity 260 providing a Device-Industrial Interworking Function (D-IIWF).

The device gateway may be configured such that one or several devices are connected to the device gateway 200. The device gateway comprises the UE functionality 250 identified by the IMEI, International Mobile Equipment Identity, or the IMSI, International Mobile Subscriber Identity, and the Device-Industrial Interworking Function, D-IIWF, 260. The function 260 implements the functionality to encapsulate and decapsulate the non-IP traffic to IP routable traffic and thus the multiplexing or demultiplexing of the traffic from the device or the devices to a single UE.

Furthermore, the cellular network orchestrator 42 is shown and the OT operator 50, which is in communication with the connectivity orchestration entity 100. The applications 20 to 22 are connected to a network gateway 30 which provides the other endpoint of the tunnels or bearers generated between the device gateway 200 and the network gateway 30. Furthermore the network gateway interfaces the connectivity orchestration entity 100.

Each of the tunnels 60 has a well-specified transmission characteristic to meet the use case requirements that exist for the different data exchange between the device and the corresponding application. There is an n:m relationship between the n devices and the m tunnels, meaning that multiple devices may connect to the same tunnel. In this case one or more EPS bearers with well-defined characteristics, such as latency or bandwidth, can be established: Accordingly n is not necessarily equal to m.

First of all, a single EPS bearer may be established that complies with the most demanding device connectivity requirements or QoS requirements when several device-applications communication are transmitted over a single data packet connection. Furthermore, it is possible to establish one EPS bearer per device or one EPS bearer per group of devices that have the same QoS requirements or connectivity requirements. In the following, connectivity requirements and QoS requirements are used as synonyms and should describe the requirements needed for the data exchange, such as the latency, bandwidth, packet loss and/or jitter.

The mapping of the exchanged data traffic to bearers can be done using Traffic Flow Templates, TFT, in the device gateway 200.

On the fixed access side of the cellular network 41 the data connections or tunnels terminate in the network gateway 30. The network gateway 30 implements functionality to encapsulate an decapsulate the traffic from or to the device gateway and it forwards the data traffic to one or more of the connected applications 20 to 22. Many devices may connect to one application or many applications may connect to one device.

The device gateway 200 can provide the connectivity orchestration entity 100 with the information about the connected devices, its own cellular network identities such as the IMSI or the device gateway identity and the addressing information of the application to be connected, such as the network gateway's IP address. In addition, the connectivity orchestration entity stores the mapping between the device and required QoS requirements. With this information the connectivity orchestration entity orders the cellular network connectivity with the required characteristics and manages the virtual tunneling endpoints in the device gateway 200 and the network gateway 30, i.e. the endpoints of the data exchange.

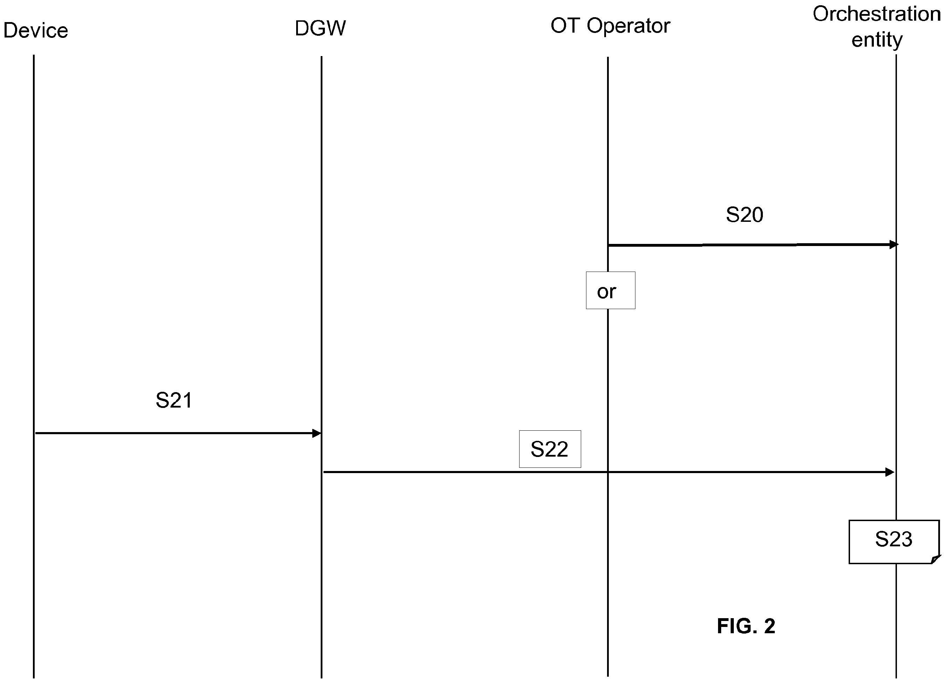

In connection with Fig. 2 it is disclosed how the connectivity orchestration entity gets informed about the QoS requirements needed for the data connection to be set up to the application. Fig. 2 shows two different examples how this can be implemented. In a first example as shown in step S20, the OT operator 50 receives the connectivity requirements such as the bandwidth or the latency for a device, e.g. from its manufacturer or from a datasheet, and specifies it in the connectivity orchestration entity 100. The entity 100 stores this information. As an alternative, the QoS or connectivity requirements can automatically be detected by the gateway 200 using known mechanisms such as TSN, (Time Sensitive Networks) Ethernet mechanisms such as the Stream Reservation Protocol. In this case the device gateway 200 transmits the connectivity requirements to the connectivity orchestration entity 100. This is reflected by steps S21 and S22 of Fig. 2. As shown by step S23, as a result the orchestration entity has the QoS requirements needed for the data exchange. One possible implementation is as follows:
*S20 Specify connectivity requirements per device*
*S21 Connect to DGW*
*Provide parameters defining the connection requirements*
*S22 Register device connection requirements*
*S23 device connection requirements*

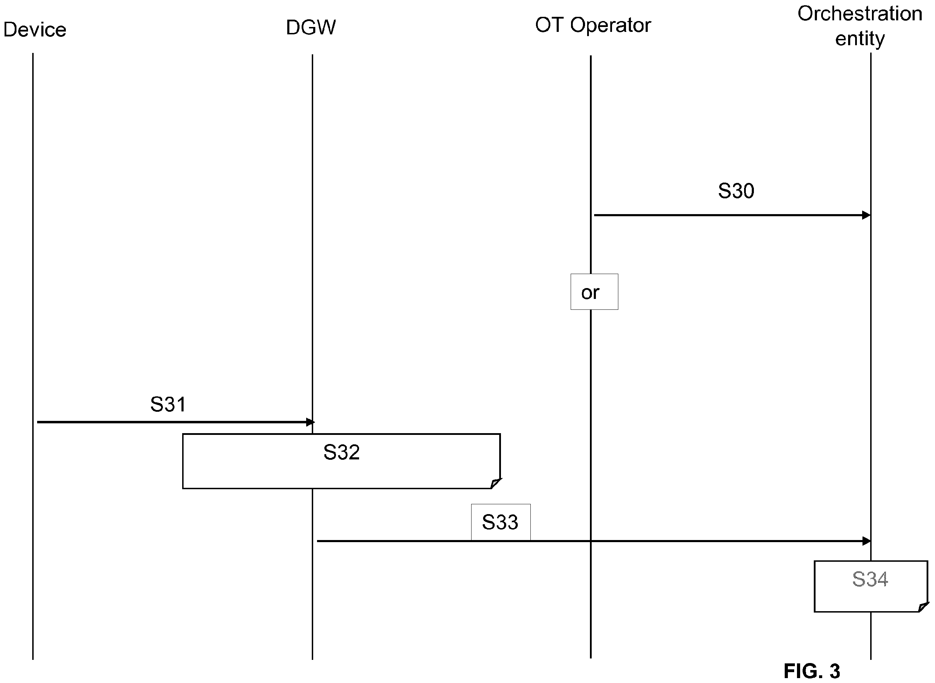

Fig. 3 shows how the address information of the device to be connected is determined by the orchestration entity. The device is connected to the device gateway and its addressing information, such as the device ID, the device gateway ID and the port, is input by the operator into the connectivity orchestration entity 100. In step S30 the operator can specify the device addressing information with the device ID, the device gateway ID and the port in the orchestration entity 100. As an alternative, as shown by step S31, the device may automatically provide the information of the device ID and the connected port number to the gateway, so that the gateway knows the device (S32) and can register the device at the orchestration entity by adding the gateway identity to the received information in step S33. Thus, in step S34 in addition to the information received with the procedure shown in Fig. 2 the device addressing information is now additionally available at the orchestration entity 100. Summarizing the steps would be as follows:
*S30 Specify device addressing information (DevID,DGW-ID, port)*
*S31 Connect to DGW*
*S32 Detect Device (DevID, port)*
*S33 Register device (DevID, DGW ID, port)*
*S34 device connection requirements*
***Device addressing information***
***(DevID, DGW-ID, port)***

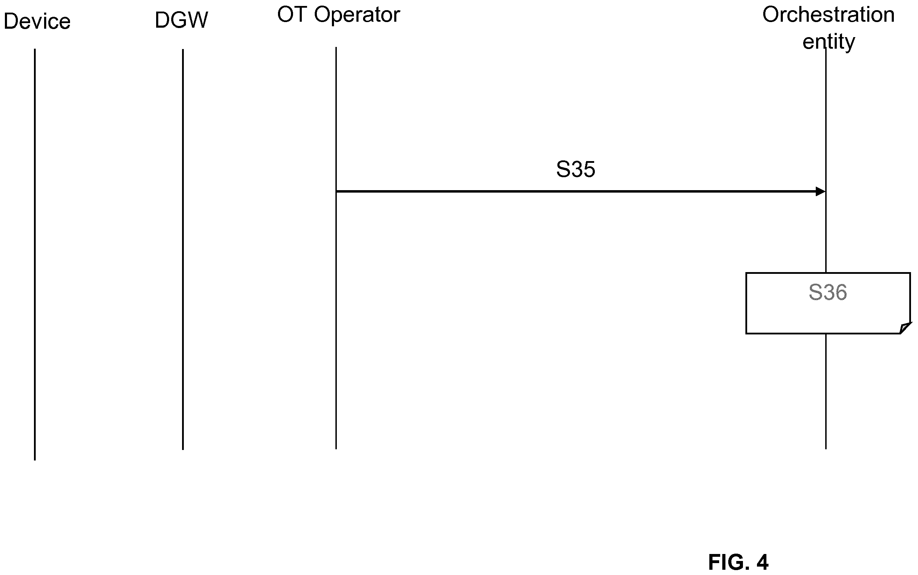

As shown in Fig. 4, the operator can additionally specify the address information of the application, such as the application's IP address and the application ID to which the device should be connected. In Fig. 4 this is done manually by the operator in step S35, so that in step S36 in addition to the information which has already been available the application addressing information is available at the orchestration entity. Accordingly, the steps could be as follows:
*S35 Specify application addressing information (applicationlD, applicationIP)*
*S36 device connection requirements*
*Device addressing information (DevID,DGW-ID, port)*
***Application addressing information***
***(applicationlD, applicationIP)***

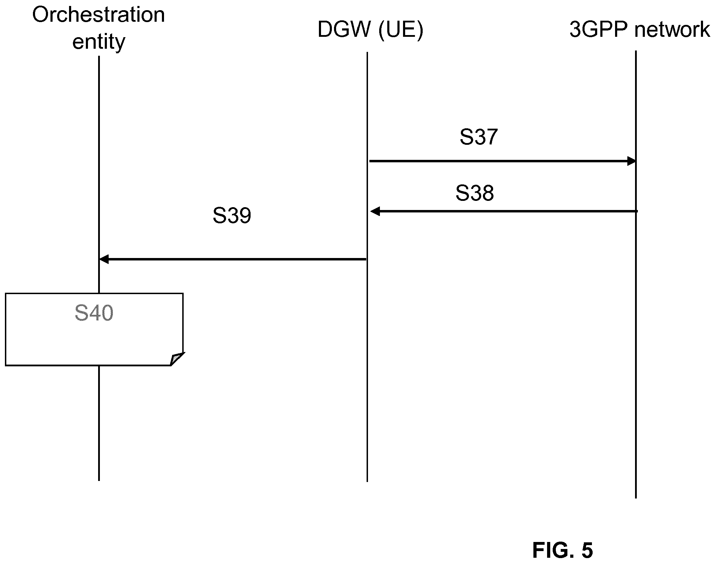

As shown in Fig. 5, the device gateway can register as UE to the cellular network in step S37. During this process an IP address is assigned to the device gateway as shown by step S38. In step S39 the device gateway forwards the obtained IP address together with the identity of the gateway to the orchestration entity 100. As shown in step S40, the orchestration entity has all the information that is helpful to create a characteristics aware connection between the device and its corresponding application at his point in time. Accordingly, the steps could be as follows:
*S37 Register to 3GPP NW*
*S38 Assign IP to DGW*
*S39 Send connectivity info (IP, DGW ID)*
*S39 device connection requirements*
*S40 Device addressing information (DevID, DGW-ID, port)*
*Application addressing information*
*(applicationID, applicationIP)*
***DGW addressing information (DGW IP)***

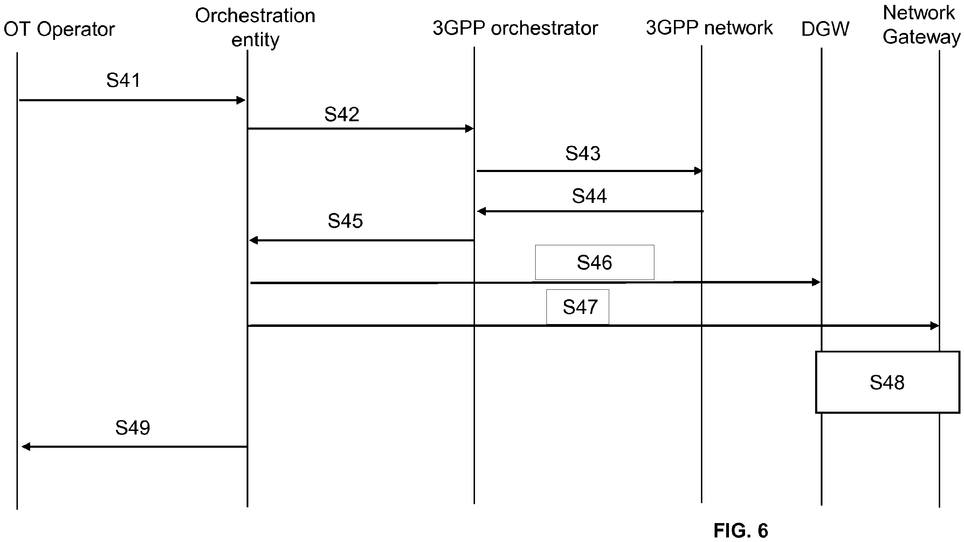

As shown in Fig. 6, the operator may optionally connect the device and the application to the orchestration entity (S41). Triggered by the registration of the device gateway or manually ordered by the operator 50, the orchestration entity orders a connectivity across the cellular network with the required characteristics which were collected as indicated above in figs. 2 to 5. In this step S42 the IP address or the address of the device gateway, the IP address of the application and the QoS requirements are transmitted to the cellular network orchestration entity, by way of example the OSS, the Operations Support Systems of the cellular network. In step S43 the orchestration entity creates the required connectivity. As an example, in a 4G packet core network this can be done via the Policy Control Function, PCRF, that triggers the dynamic creation of dedicated EPS bearers in the packet gateway, as shown by steps S43 and S44. In step S45 the information is forwarded to the orchestration entity 100. The orchestration entity then transmits the tunnel parameters to the device gateway 200, (S46). In the figure, VxLAN is taken as an example; other tunneling mechanisms, however, require different parameters. In the example shown the transmitted information comprises the IP addresses of the two ends of the tunnel, the port number and a Virtual Network Identifier, VNI. In the same way in step S47 the orchestration entity sends the adequate tunnel parameters to the network gateway. Accordingly, the tunnel is established in step S48. In step S49 the operator is then informed about the established connection between the device and the application. Accordingly, the steps could be as follows:
S41 Connect device and application (optional)
S42 Create connectivity (DGW-IP, application-IP, connectivity requirements)
S43-S45 Establish connectivity (e.g. dedicated EPS bearer)
S46 Create tunnel endpoint (tunnel parameter, e.g. Local/remote IP, port, VNI)
S47 Create tunnel endpoint (tunnel parameter, e.g. Local/remote IP, port, VNI)
S48 Tunnel established
S49 Connection established

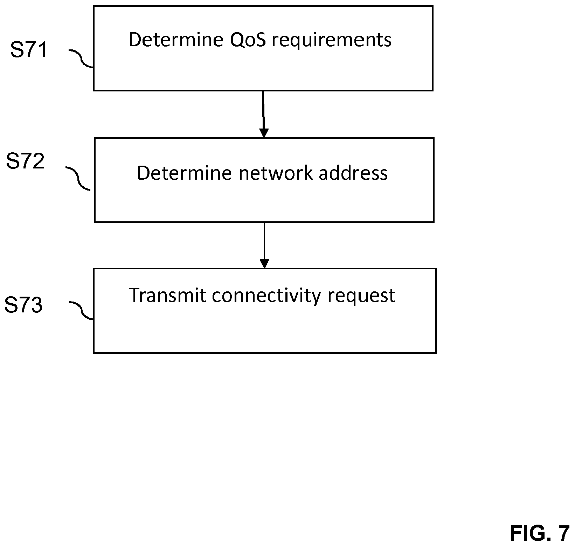

Fig. 7 summarizes some of the steps carried out by the connectivity orchestration entity in the above discussed procedures. In step S71 the connectivity orchestration entity determines the QoS requirements needed for the data exchange which were provided to the orchestration entity as mentioned above in Fig. 2. In step S72 the network address is determined by the connectivity orchestration entity with which the device will be addressed in the cellular network. This was discussed above in connection with Fig. 3. Furthermore, a connectivity request is transmitted to the cellular network to set up the data packet connection through the cellular network to the corresponding application meeting the determined QoS requirements as specified in Fig. 6, especially step S46 (S73).

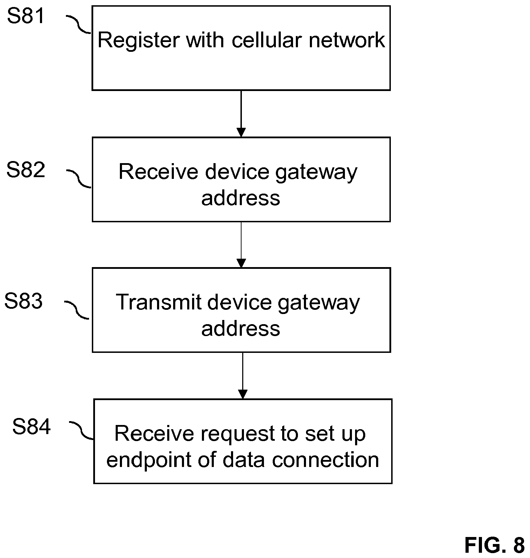

Fig. 8 summarizes some of the steps carried out by the device gateway in the process discussed above. In step S81 the device gateway registers with the cellular network so that it can receive a device gateway address in step S82. With this address the device gateway is addressable in the cellular network. In step S83 the device gateway address is transmitted to the connectivity orchestration entity 100 as discussed above in connection with Fig. 2. In step S84 a request is received from the connectivity orchestration entity to set up the first endpoint of the data connection used for the data exchange between the device and the corresponding application. In an optional step not shown in Fig. 8 the device gateway then actually sets up the first endpoint of the data connection based on the received request.

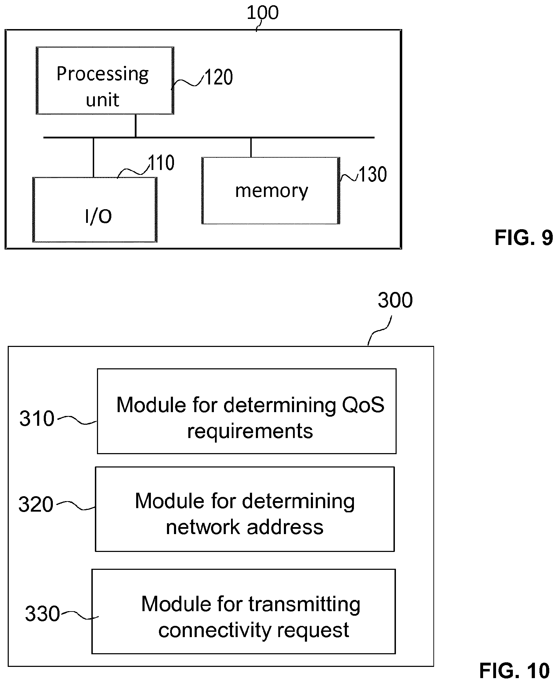

Fig. 9 shows a schematic architectural view of the connectivity orchestration entity 100 which can carry out the above discussed steps of orchestrating the connectivity of network agnostic devices to the network. The entity 100 comprises an interface or input/output 110 which is provided for transmitting user data or control messages to other entities and is configured to receive user data or control messages from other entities. The messages received from other entities or transmitted to other entities were discussed above in connection with figs. 2 to 6. The entity 100 furthermore comprises a processing unit 120 which is responsible for the operation of the entity. The processing unit 120 comprises one or more processors and can carry out instructions stored on a memory 130, wherein the memory may include a read only memory, a random access memory, a mass storage, a hard disk or the like. The memory 120 can furthermore include suitable program code to be executed by the processing unit 120 so as to implement the above-described functionalities in which the entity 100 is involved.

Fig. 10 shows another schematic architectural view of the connectivity orchestration entity comprising a first module 310 configured to determine the QoS requirements of the device and of the data connection to the corresponding application. A second module 320 is provided configured to determine the network address at which the device can be addressed in the cellular network. A module 330 is provided configured to transmit the connectivity request to the cellular network to set up the data packet connection meeting the determined QoS requirements.

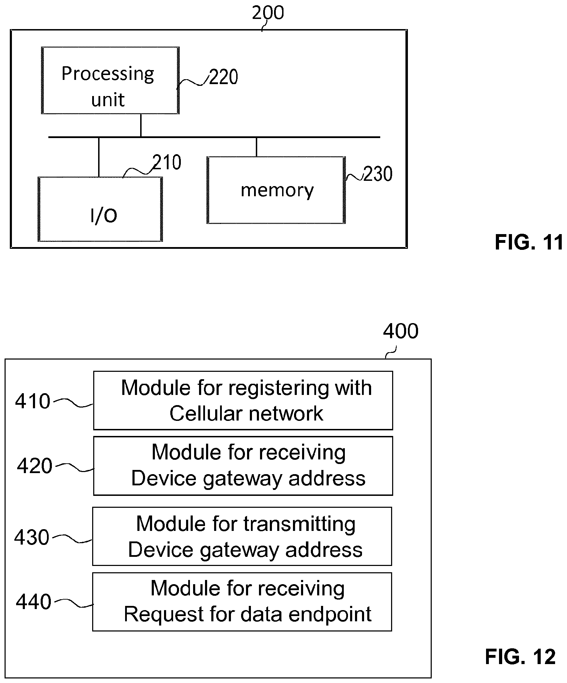

Fig. 11 shows a schematic architectural view of the device gateway 200 which can connect the device to the network and to the application as shown in Fig. 1. The device gateway 200 comprises an interface or input/output 210 provided for transmitting user data or control messages to other entities and provided for receiving user data or control messages from other entities. The interface 110 is especially qualified to receive the messages or data as discussed in connection with figs 2 to 6. The gateway 200 furthermore comprises a processing unit 220 which is responsible for the operation of the gateway 200. The processing unit 220 comprises one or more processors and can carry out instructions stored on a memory 230, wherein the memory may include a read only memory, a random access memory, a mass storage, a hard disk or the like. The memory 230 can include a suitable program code to be executed by the processing unit 220 so as to implement the above-described functionalities in which the gateway is involved.

Fig. 12 shows another schematic architectural view of the device gateway 400 which comprises a first module 410 configured to register with the cellular network. A module 420 is provided configured to receive the device gateway address and a module 430 is provided configured to transmit the device gateway address to the connectivity orchestration entity. A module 440 is provided configured to receive the request from the connectivity orchestration entity to set up the first endpoint of the data connection, and a module, not shown, may be provided to finally set up the first endpoint of the data connection based on the received request.

From the above said some general conclusions can be drawn:
When the Quality of Service requirements are determined, it is possible to determine the parameter such as the maximum latency of the data exchange or the bandwidth needed for the data exchange. Further QoS parameters can contain the packet loss, the bit rate, the jitter, etc.

The connectivity orchestration entity 100 can furthermore determine further parameters, such as the device identifier allowing a unique identification of the device, or a device gateway identifier allowing a unique identification of the device gateway via which the device is connected to the cellular network, in the cellular network. The connectivity orchestration entity 100 may furthermore determine the device gateway address with which the device gateway 200 is addressed in a cellular network and/or an application identifier allowing a unique identification of the application with which the device is exchanging data. The connectivity orchestration entity can furthermore determine an application address with which the corresponding application can be addressed. One or several of the above identified pieces of information may be transmitted together with the connectivity request to the cellular network.

The connectivity orchestration entity 100 requests the device gateway 200 to set up a first endpoint of the data connection between the device and the corresponding application used for the data exchange, wherein the device gateway is the gateway via which the device is connected to the cellular network. Furthermore, the network gateway is requested to set up the second endpoint of the data connection between the device and the corresponding application, wherein the network gateway is the gateway via which the corresponding application is connected to the cellular network.

The request to set up the data connection can comprise the request to set up the data connection meeting the determined QoS requirements.

For the determination of the QoS requirements, the QoS requirements may be received from an operator of the device or from the device gateway via which the device is connected to the cellular network.

Furthermore, it is determined the number of devices connected to the device gateway and the QoS requirements for each of the devices connected to the device gateway. The device gateway may be requested to set up the data connection as a single data connection such that the QoS requirements of all devices connected to the device gateway are met. This can mean that the data connection has to comply at least with the most demanding QoS requirements meaning the highest QoS requirements. Furthermore, the data connection may be set up such that one data connection is set up per device or one data connection is set up for the group of devices that have the same QoS requirements.

As far as the device gateway 200 is concerned, the device gateway further informs the connectivity orchestration entity about the number of connected devices which are connected to the device gateway and about an identifier for each connected device which allows that each of the devices connected to the gateway can be identified.

The device gateway may furthermore inform the connectivity orchestration entity 100 about a device gateway identifier allowing a unique identification of the device gateway in the cellular network. Furthermore, the connectivity orchestration entity may be informed of an address of the network gateway via which the application with which the device is in a data exchange is addressed through the cellular network. The device gateway may further register the device at the connectivity orchestration entity, wherein this registering comprises the step of transmitting a device identifier, a device gateway identifier and port information to the connectivity orchestration entity, wherein the port information indicates at which port of the device gateway the device is connected.

As discussed above, the devices which are agnostic for the network and the network capabilities can trigger the establishment of a connection through the cellular network with well-defined characteristics without the need to communicate directly with the orchestration systems. The devices may get a dedicated connection or they may share one connection with other devices.

The devices itself do not have to communicate the connectivity requirements to the other entities.

## Claims

1. A method for operating a connectivity orchestration entity (100) configured to orchestrate a connectivity of a plurality of devices (10-12) to a cellular network (41), wherein each of the plurality of devices (10-12) is configured to exchange data with a corresponding application (20-22) via the cellular network, the method comprising, for each of the plurality of devices:
- determining Quality of Service, QoS, requirements needed for the data exchange of the device with the corresponding application,
- determining a network address with which the device will be addressed in the cellular network (41),
- transmitting a connectivity request to the cellular network to set up a data packet connection through the cellular network to the corresponding application meeting the determined QoS requirements,
- requesting a device gateway (200) to set up a first endpoint of a data connection between the device (10-12) and the corresponding application (20-22) used for the data exchange, the device gateway being the gateway via which the device is connected to the cellular network (41),
- requesting a network gateway (30) to set up a second endpoint of the data connection between the device and the corresponding application, the network gateway being the gateway via which the corresponding application is connected to the cellular network,
- determining the number of devices connected to the device gate way and QoS requirements for each of the devices connected to the device gateway.

2. A method for operating a device gateway (200) configured to set up a connection of a device (10-12) to a cellular network, wherein the device is configured to exchange data with an application via the cellular network, the method comprising:
- registering with the cellular network,
- receiving a device gateway address with which the device gateway is addressed in the cellular network,
- transmitting the device gateway address of the device gateway in the cellular network to a connectivity orchestration entity (100) configured to orchestrate a connectivity of a plurality of the devices (10-12) to the cellular network,
- receiving a request from the connectivity orchestration entity (100) to set up a first endpoint of a data connection used for the data exchange between the device and the corresponding application,
- informing the connectivity orchestration entity (100) about the number of connected devices which are connected to the device gateway, and about an identifier for each connected device allowing each of the connected devices to be identified.

3. A connectivity orchestration entity (100) configured to orchestrate a connectivity of a plurality of devices to a cellular network, wherein each of the plurality of devices is configured to exchange data with a corresponding application via the cellular network, the connectivity orchestration entity comprising a memory and at least one processing unit, the memory containing instructions executable by the at least one processing unit, wherein the connectivity orchestration entity is operative to:
- determine Quality of Service, QoS, requirements needed for the data exchange of the device with the corresponding application,
- determine a network address with which the device will be addressed in the cellular network (41),
- transmit a connectivity request to the cellular network to set up a data packet connection through the cellular network to the corresponding application meeting the determined QoS requirements,
- request a device gateway (200) to set up a first endpoint of a data connection between the device (10-12) and the corresponding application (20-22) used for the data exchange, the device gateway being the gateway via which the device is connected to the cellular network (41),
- request a network gateway (30) to set up a second endpoint of the data connection between the device and the corresponding application, the network gateway being the gateway via which the corresponding application is connected to the cellular network,
- determine the number of devices connected to the device gate way and QoS requirements for each of the devices connected to the device gateway.

4. The connectivity orchestration entity according to claim 3, further being operative, for determining
the QoS requirements, to determine at least one of the following:
- a maximum latency of the data exchange,
- a bandwidth needed for the data exchange.

5. The connectivity orchestration entity according to claim 3 or 4, further being operative to determine at least one of the following pieces of information:
- a device identifier allowing a unique identification of the device (10-12),
- a device gateway identifier allowing a unique identification of a device gateway (200), via which the device is connected to the cellular network, in the cellular network,
- a device gateway address with which the device gateway, via which the device is connected to the cellular network, is addressed in the cellular network,
- an application identifier allowing a unique identification of the application (20-22) with which the device is exchanging data,
- an application address with which the corresponding application (20-22) can be addressed, wherein at least one of the determined pieces of information is transmitted to the cellular network (41) together with the connectivity request.

6. The connectivity orchestration entity according to claim 3, further being operative, for requesting to set up the data connection, to set up the data connection meeting the determined QoS requirements.

7. The connectivity orchestration entity according to any of claims 3 to 6, further being operative, for determining the QoS requirements, to receive the QoS requirement from an operator (50) of the device or from a device gateway (200), via which the device is connected to the cellular network.

8. A device gateway (200) configured to set up a connection of a device (10-12) to a cellular network, wherein the device is configured to exchange data with an application via the cellular network, the device gateway comprising a memory (230) and at least one processing unit (220), the memory containing instructions executable by the at least one processing unit, wherein the device gateway is operative to:
- register with the cellular network,
- receive a device gateway address with which the device gateway is addressed in the cellular network,
- transmit the device gateway address of the device gateway in the cellular network to a connectivity orchestration entity (100) configured to orchestrate a connectivity of a plurality of the devices (10-12) to the cellular network,
- receive a request from the connectivity orchestration entity (100) to set up a first endpoint of a data connection used for the data exchange between the device and the corresponding application, - inform the connectivity orchestration entity (100) about the number of connected devices which are connected to the device gateway, and about an identifier for each connected device allowing each of the connected devices to be identified.

9. The device gateway according to claim 8, further being operative to inform the connectivity orchestration entity (100) about a device gateway identifier allowing a unique identification of a device gateway in the cellular network.

10. The device gateway according to any of claims 8 or 9, further being operative to inform the connectivity orchestration entity (100) of an address of a network gateway via which the application with which the device is in the data exchange is addressed though the cellular network.

11. The device gateway according to any of claims 8 to 10, further being operative to register the device at the connectivity orchestration entity, and for registering configured to transmit a device identifier, a device gateway identifier and port information to the connectivity orchestration entity, the port information indicating at which port of the device gateway the device is connected.

12. A system comprising the connectivity orchestration entity according to any of claims 3 to 7, and a device gateway as mentioned in any of claims 8 to 11.

13. A computer program comprising program code to be executed by at least one processing unit of a connectivity orchestration entity, wherein execution of the program code causes the at least one processing unit to execute a method according to claim 1.

14. A computer program comprising program code to be executed by at least one processing unit of a device gateway, wherein execution of the program code causes the at least one processing unit to execute a method according to claim 2.

## Patentansprüche

1. Verfahren zum Betreiben einer Konnektivitätsorchestrierungsentität (100), die zum Orchestrieren einer Konnektivität einer Mehrzahl von Vorrichtungen (10-12) mit einem Mobilfunknetzwerk (41) konfiguriert ist, wobei jede der Mehrzahl von Vorrichtungen (10-12) zum Austauschen von Daten mit einer entsprechenden Anwendung (20-22) über das Mobilfunknetzwerk konfiguriert ist, wobei das Verfahren für jede der Mehrzahl von Vorrichtungen Folgendes umfasst:
- Bestimmen von Dienstqualitätsanforderungen, QoS-Anforderungen, die für den Datenaustausch der Vorrichtung mit der entsprechenden Anwendung benötigt werden,
- Bestimmen einer Netzwerkadresse, mit der die Vorrichtung im Mobilfunknetzwerk (41) adressiert wird,
- Senden einer Konnektivitätsanforderung an das Mobilfunknetzwerk zum Aufbauen einer Datenpaketverbindung über das Mobilfunknetzwerk mit der entsprechenden Anwendung, die die bestimmten QoS-Anforderungen erfüllt,
- Auffordern eines Vorrichtungs-Gateways (200) zum Aufbauen eines ersten Endpunkts einer Datenverbindung zwischen der Vorrichtung (10-12) und der entsprechenden Anwendung (20-22), der für den Datenaustausch verwendet wird, wobei das Vorrichtungs-Gateway das Gateway ist, über das die Vorrichtung mit dem Mobilfunknetzwerk (41) verbunden ist,
- Auffordern eines Netzwerk-Gateways (30) zum Aufbauen eines zweiten Endpunkts der Datenverbindung zwischen der Vorrichtung und der entsprechenden Anwendung, wobei das Netzwerk-Gateway das Gateway ist, über das die entsprechende Anwendung mit dem Mobilfunknetzwerk (41) verbunden ist,
- Bestimmen der Anzahl von Vorrichtungen, die mit dem Vorrichtungs-Gateway verbunden ist, und der QoS-Anforderungen für jede der Vorrichtungen, die mit dem Vorrichtungs-Gateway verbunden ist.

2. Verfahren zum Betreiben eines Vorrichtungs-Gateways (200), das zum Aufbauen einer Verbindung einer Vorrichtung (10-12) mit einem Mobilfunknetzwerk konfiguriert ist, wobei die Vorrichtung zum Austauschen von Daten mit einer Anwendung über das Mobilfunknetzwerk konfiguriert ist, wobei das Verfahren Folgendes umfasst:
- Anmelden beim Mobilfunknetzwerk,
- Empfangen einer Vorrichtungs-Gateway-Adresse, mit der das Vorrichtungs-Gateway im Mobilfunknetzwerk adressiert wird,
- Senden der Vorrichtungs-Gateway-Adresse des Vorrichtungs-Gateways im Mobilfunknetzwerk an eine Konnektivitätsorchestrierungsentität (100), die zum Orchestrieren einer Konnektivität einer Mehrzahl von Vorrichtungen (10-12) mit dem Mobilfunknetzwerk konfiguriert ist,
- Empfangen einer Anforderung von der Konnektivitätsorchestrierungsentität (100) zum Aufbauen eines ersten Endpunkts einer Datenverbindung, der für den Datenaustauch zwischen der Vorrichtung und der entsprechenden Anwendung verwendet wird,
- Informieren der Konnektivitätsorchestrierungsentität (100) über die Anzahl von verbundenen Vorrichtungen, die mit dem Vorrichtungs-Gateway verbunden ist, und über eine Kennung für jede verbundene Vorrichtung, die die Identifizierung jeder der verbundenen Vorrichtungen ermöglicht.

3. Konnektivitätsorchestrierungsentität (100), die zum Orchestrieren einer Konnektivität einer Mehrzahl von Vorrichtungen mit einem Mobilfunknetzwerk konfiguriert ist, wobei jede der Mehrzahl von Vorrichtungen zum Austauschen von Daten mit einer entsprechenden Anwendung über das Mobilfunknetzwerk konfiguriert ist, wobei die Konnektivitätsorchestrierungsentität einen Speicher und mindestens eine Verarbeitungseinheit umfasst, der Speicher Anweisungen enthält, die von dem mindestens einen Verarbeitungseinheit ausgeführt werden können, und wobei die Konnektivitätsorchestrierungsentität ausgelegt ist zum:
- Bestimmen von Dienstqualitätsanforderungen, QoS-Anforderungen, die für den Datenaustausch der Vorrichtung mit der entsprechenden Anwendung benötigt werden,
- Bestimmen einer Netzwerkadresse, mit der die Vorrichtung im Mobilfunknetzwerk (41) adressiert wird,
- Senden einer Konnektivitätsanforderung an das Mobilfunknetzwerk zum Aufbauen einer Datenpaketverbindung über das Mobilfunknetzwerk mit der entsprechenden Anwendung, die die bestimmten QoS-Anforderungen erfüllt,
- Auffordern eines Vorrichtungs-Gateways (200) zum Aufbauen eines ersten Endpunkts einer Datenverbindung zwischen der Vorrichtung (10-12) und der entsprechenden Anwendung (20-22), der für den Datenaustausch verwendet wird, wobei das Vorrichtungs-Gateway das Gateway ist, über das die Vorrichtung mit dem Mobilfunknetzwerk (41) verbunden ist,
- Auffordern eines Netzwerk-Gateways (30) zum Aufbauen eines zweiten Endpunkts der Datenverbindung zwischen der Vorrichtung und der entsprechenden Anwendung, wobei das Netzwerk-Gateway das Gateway ist, über das die entsprechende Anwendung mit dem Mobilfunknetzwerk verbunden ist,
- Bestimmen der Anzahl von Vorrichtungen, die mit dem Vorrichtungs-Gateway verbunden ist, und der QoS-Anforderungen für jede der Vorrichtungen, die mit dem Vorrichtungs-Gateway verbunden ist.

4. Konnektivitätsorchestrierungsentität nach Anspruch 3, die ferner zum Bestimmen der QoS-Anforderungen ausgelegt ist, um mindestens eines von Folgenden zu bestimmen:
- eine maximale Latenz des Datenaustauschs,
- eine Bandbreite, die für den Datenaustausch benötigt wird.

5. Konnektivitätsorchestrierungsentität nach Anspruch 3 oder 4, die ferner zum Bestimmen mindestens eines der folgenden Informationselemente ausgelegt ist:
- eine Vorrichtungskennung, die eine eindeutige Identifizierung der Vorrichtung (10-12) ermöglicht,
- eine Vorrichtungs-Gateway-Kennung, die eine eindeutige Identifizierung eines Vorrichtungs-Gateways (200) im Mobilfunknetzwerk ermöglicht, über das die Vorrichtung mit dem Mobilfunknetzwerk verbunden ist,
- eine Vorrichtungs-Gateway-Adresse, mit der das Vorrichtungs-Gateway, über das die Vorrichtung mit dem Mobilfunknetzwerk verbunden ist, im Mobilfunknetzwerk adressiert wird,
- eine Anwendungskennung, die eine eindeutige Identifizierung der Anwendung (20-22) ermöglicht, mit der die Vorrichtung Daten austauscht,
- eine Anwendungsadresse, mit der die entsprechende Anwendung (20-22) adressiert werden kann, wobei mindestens eines der bestimmten Informationselemente zusammen mit der Konnektivitätsanforderung an das Mobilfunknetzwerk (41) gesendet wird.

6. Konnektivitätsorchestrierungsentität nach Anspruch 3, die ferner so ausgelegt ist, dass sie zum Anfordern des Aufbaus der Datenverbindung die Datenverbindung aufbaut, die die bestimmten QoS-Anforderungen erfüllt.

7. Konnektivitätsorchestrierungsentität nach einem der Ansprüche 3 bis 6, die ferner so ausgelegt ist, dass sie zum Bestimmen der QoS-Anforderungen die QoS-Anforderung von einem Bediener (50) der Vorrichtung oder von einem Vorrichtungs-Gateway (200) empfängt, über das die Vorrichtung mit dem Mobilfunknetzwerk verbunden ist.

8. Vorrichtungs-Gateway (200), das zum Aufbauen einer Verbindung einer Vorrichtung (10-12) mit einem Mobilfunknetzwerk konfiguriert ist, wobei die Vorrichtung zum Austauschen von Daten mit einer entsprechenden Anwendung über das Mobilfunknetzwerk konfiguriert ist, wobei das Vorrichtungs-Gateway einen Speicher (230) und mindestens eine Verarbeitungseinheit (220) umfasst, der Speicher Anweisungen enthält, die von dem mindestens einen Verarbeitungseinheit ausgeführt werden können, und wobei das Vorrichtungs-Gateway ausgelegt ist zum:
- Anmelden beim Mobilfunknetzwerk,
- Empfangen einer Vorrichtungs-Gateway-Adresse, mit der das Vorrichtungs-Gateway im Mobilfunknetzwerk adressiert wird,
- Senden der Vorrichtungs-Gateway-Adresse des Vorrichtungs-Gateways im Mobilfunknetzwerk an eine Konnektivitätsorchestrierungsentität (100), die zum Orchestrieren einer Konnektivität einer Mehrzahl von Vorrichtungen (10-12) mit dem Mobilfunknetzwerk konfiguriert ist,
- Empfangen einer Anforderung von der Konnektivitätsorchestrierungsentität (100) zum Aufbauen eines ersten Endpunkts einer Datenverbindung, der für den Datenaustauch zwischen der Vorrichtung und der entsprechenden Anwendung verwendet wird,
- Informieren der Konnektivitätsorchestrierungsentität (100) über die Anzahl von verbundenen Vorrichtungen, die mit dem Vorrichtungs-Gateway verbunden ist, und über eine Kennung für jede verbundene Vorrichtung, die die Identifizierung jeder der verbundenen Vorrichtungen ermöglicht.

9. Vorrichtungs-Gateway nach Anspruch 8, das ferner zum Informieren der Konnektivitätsorchestrierungsentität (100) über eine Vorrichtungs-Gateway-Kennung ausgelegt ist, die eine eindeutige Identifizierung eines Vorrichtungs-Gateways im Mobilfunknetzwerk ermöglicht.

10. Vorrichtungs-Gateway nach einem der Ansprüche 8 oder 9, das ferner so ausgelegt ist, dass es die Konnektivitätsorchestrierungsentität (100) über eine Adresse eines Netzwerk-Gateways informiert, über das die Anwendung, mit der die Vorrichtung Daten austauscht, über das Mobilfunknetzwerk adressiert wird.

11. Vorrichtungs-Gateway nach einem der Ansprüche 8 bis 10, das ferner zum Anmelden der Vorrichtung bei der Konnektivitätsorchestrierungsentität ausgelegt und so konfiguriert ist, dass es zum Anmelden eine Vorrichtungskennung, eine Vorrichtungs-Gateway-Kennung und Portinformationen an die Konnektivitätsorchestrierungsentität sendet, wobei die Portinformationen angeben, an welchen Port des Vorrichtungs-Gateways die Vorrichtung angeschlossen ist.

12. System, umfassend die Konnektivitätsorchestrierungsentität nach einem der Ansprüche 3 bis 7 und ein Vorrichtungs-Gateway nach einem der Ansprüche 8 bis 11.

13. Computerprogramm, umfassend Programmcode, der von mindestens einer Verarbeitungseinheit einer Konnektivitätsorchestrierungsentität ausgeführt werden soll, wobei die Ausführung des Programmcodes die mindestens eine Verarbeitungseinheit zum Ausführen eines Verfahrens nach Anspruch 1 veranlasst.

14. Computerprogramm, umfassend Programmcode, der von mindestens einer Verarbeitungseinheit eines Vorrichtungs-Gateways ausgeführt werden soll, wobei die Ausführung des Programmcodes die mindestens eine Verarbeitungseinheit zum Ausführen eines Verfahrens nach Anspruch 2 veranlasst.

## Revendications

1. Procédé de fonctionnement d'une entité d'orchestration de connectivité (100) configurée pour orchestrer une connectivité d'une pluralité de dispositifs (10-12) à un réseau cellulaire (41), dans lequel chacun de la pluralité de dispositifs (10-12) est configuré pour échanger des données avec une application (20-22) correspondante par l'intermédiaire du réseau cellulaire, le procédé comprenant, pour chacun de la pluralité de dispositifs :
- la détermination d'exigences de qualité de service, QoS, nécessaires pour l'échange de données du dispositif avec l'application correspondante,
- la détermination d'une adresse de réseau avec laquelle le dispositif sera adressé dans le réseau cellulaire (41),
- la transmission d'une demande de connectivité au réseau cellulaire pour établir une connexion de paquets de données à travers le réseau cellulaire à l'application correspondante remplissant les exigences de QoS déterminées,
- la demande à une passerelle de dispositif (200) d'établir un premier point d'extrémité d'une connexion de données entre le dispositif (10-12) et l'application (20-22) correspondante utilisée pour l'échange de données, la passerelle de dispositif étant la passerelle par l'intermédiaire de laquelle le dispositif est connecté au réseau cellulaire (41),
- la demande à une passerelle de réseau (30) d'établir un deuxième point d'extrémité de la connexion de données entre le dispositif et l'application correspondante, la passerelle de réseau étant la passerelle par l'intermédiaire de laquelle l'application correspondante est connectée au réseau cellulaire,
- la détermination du nombre de dispositifs connectés à la passerelle de dispositif et des exigences de QoS pour chacun des dispositifs connectés à la passerelle de dispositif.

2. Procédé de fonctionnement d'une passerelle de dispositif (200) configurée pour établir une connexion d'un dispositif (10-12) à un réseau cellulaire, dans lequel le dispositif est configuré pour échanger des données avec une application par l'intermédiaire du réseau cellulaire, le procédé comprenant :
- l'enregistrement auprès du réseau cellulaire,
- la réception d'une adresse de passerelle de dispositif avec laquelle la passerelle de dispositif est adressée dans le réseau cellulaire,
- la transmission de l'adresse de passerelle de dispositif de la passerelle de dispositif dans le réseau cellulaire à une entité d'orchestration de connectivité (100) configurée pour orchestrer une connectivité d'une pluralité des dispositifs (10-12) au réseau cellulaire,
- la réception d'une demande de l'entité d'orchestration de connectivité (100) pour établir un premier point d'extrémité d'une connexion de données utilisée pour l'échange de données entre le dispositif et l'application correspondante,
- l'information de l'entité d'orchestration de connectivité (100) en ce qui concerne le nombre de dispositifs connectés qui sont connectés à la passerelle de dispositif, et en ce qui concerne un identifiant de chaque dispositif connecté permettant à chacun des dispositifs connectés d'être identifié.

3. Entité d'orchestration de connectivité (100) configurée pour orchestrer une connectivité d'une pluralité de dispositifs à un réseau cellulaire, dans laquelle chacun de la pluralité de dispositifs est configuré pour échanger des données avec une application correspondante par l'intermédiaire du réseau cellulaire, l'entité d'orchestration de connectivité comprenant une mémoire et au moins une unité de traitement, la mémoire contenant des instructions exécutables par l'au moins une unité de traitement, dans laquelle l'entité d'orchestration de connectivité est fonctionnelle pour :
- déterminer des exigences de qualité de service, QoS, nécessaires pour l'échange de données du dispositif avec l'application correspondante,
- déterminer une adresse de réseau avec laquelle le dispositif sera adressé dans le réseau cellulaire (41),
- transmettre une demande de connectivité au réseau cellulaire pour établir une connexion de paquets de données à travers le réseau cellulaire à l'application correspondante remplissant les exigences de QoS déterminées,
- demander à une passerelle de dispositif (200) d'établir un premier point d'extrémité d'une connexion de données entre le dispositif (10-12) et l'application (20-22) correspondante utilisée pour l'échange de données, la passerelle de dispositif étant la passerelle par l'intermédiaire de laquelle le dispositif est connecté au réseau cellulaire (41),
- demander à une passerelle de réseau (30) d'établir un deuxième point d'extrémité de la connexion de données entre le dispositif et l'application correspondante, la passerelle de réseau étant la passerelle par l'intermédiaire de laquelle l'application correspondante est connectée au réseau cellulaire,
- déterminer le nombre de dispositifs connectés à la passerelle de dispositif et les exigences de QoS pour chacun des dispositifs connectés à la passerelle de dispositif.

4. Entité d'orchestration de connectivité selon la revendication 3, en outre fonctionnelle, pour la détermination des exigences de QoS, pour déterminer au moins l'une parmi :
- une latence maximale de l'échange de données,
- une bande passante nécessaire à l'échange de données.

5. Entité d'orchestration de connectivité selon la revendication 3 ou 4, en outre fonctionnelle pour déterminer au moins l'une des informations suivantes :
- un identifiant de dispositif permettant une identification unique du dispositif (10-12),
- un identifiant de passerelle de dispositif permettant une identification unique d'une passerelle de dispositif (200), par l'intermédiaire de laquelle le dispositif est connecté au réseau cellulaire, dans le réseau cellulaire,
- une adresse de passerelle de dispositif avec laquelle la passerelle de dispositif, par l'intermédiaire de laquelle le dispositif est connecté au réseau cellulaire, est adressée dans le réseau cellulaire,
- un identifiant d'application permettant une identification unique de l'application (20-22) avec laquelle le dispositif échange des données,
- une adresse d'application avec laquelle l'application (20-22) correspondante peut être adressée,
dans laquelle au moins l'une des informations déterminées est transmise au réseau cellulaire (41) avec la demande de connectivité.

6. Entité d'orchestration de connectivité selon la revendication 3, en outre fonctionnelle, pour la demande d'établissement de la connexion de données, pour établir la connexion de données remplissant les exigences de QoS déterminées.

7. Entité d'orchestration de connectivité selon l'une quelconque des revendications 3 à 6, en outre fonctionnelle, pour la détermination des exigences de QoS, pour recevoir les exigences de QoS depuis un opérateur (50) du dispositif ou depuis une passerelle de dispositif (200), par l'intermédiaire de laquelle le dispositif est connecté au réseau cellulaire.

8. Passerelle de dispositif (200) configurée pour établir une connexion d'un dispositif (10-12) à un réseau cellulaire, dans lequel le dispositif est configuré pour échanger des données avec une application par l'intermédiaire du réseau cellulaire, la passerelle de dispositif comprenant une mémoire (230) et au moins une unité de traitement (220), la mémoire contenant des instructions exécutables par l'au moins une unité de traitement, dans laquelle la passerelle de dispositif est fonctionnelle pour :
- s'enregistrer auprès du réseau cellulaire,
- recevoir une adresse de passerelle de dispositif avec laquelle la passerelle de dispositif est adressée dans le réseau cellulaire,
- transmettre l'adresse de passerelle de dispositif de la passerelle de dispositif dans le réseau cellulaire à une entité d'orchestration de connectivité (100) configurée pour orchestrer une connectivité d'une pluralité des dispositifs (10-12) au réseau cellulaire,
- recevoir une demande de l'entité d'orchestration de connectivité (100) pour établir un premier point d'extrémité d'une connexion de données utilisée pour l'échange de données entre le dispositif et l'application correspondante,
- informer l'entité d'orchestration de connectivité (100) en ce qui concerne le nombre de dispositifs connectés qui sont connectés à la passerelle de dispositif, et en ce qui concerne un identifiant de chaque dispositif connecté permettant à chacun des dispositifs connectés d'être identifié.

9. Passerelle de dispositif selon la revendication 8, en outre fonctionnelle pour informer l'entité d'orchestration de connectivité (100) en ce qui concerne un identifiant de passerelle de dispositif permettant une identification unique d'une passerelle de dispositif dans le réseau cellulaire.

10. Passerelle de dispositif selon la revendication 8 ou 9, en outre fonctionnelle pour informer l'entité d'orchestration de connectivité (100) en ce qui concerne une adresse d'une passerelle de réseau par l'intermédiaire de laquelle l'application avec laquelle le dispositif échange des données est adressée à travers le réseau cellulaire.

11. Passerelle de dispositif selon l'une quelconque des revendications 8 à 10, en outre fonctionnelle pour enregistrer le dispositif auprès de l'entité d'orchestration de connectivité et, pour l'enregistrement, configurée pour transmettre un identifiant de dispositif, un identifiant de passerelle de dispositif et des informations de port à l'entité d'orchestration de connectivité, les informations de port indiquant à quel port de la passerelle de dispositif le dispositif est connecté.

12. Système comprenant l'entité d'orchestration de connectivité selon l'une quelconque des revendications 3 à 7, et une passerelle de dispositif selon l'une quelconque des revendications 8 à 11.

13. Programme informatique comprenant un code de programme à exécuter par au moins une unité de traitement d'une entité d'orchestration de connectivité, dans lequel l'exécution du code de programme amène l'au moins une unité de traitement à exécuter un procédé selon la revendication 1.

14. Programme informatique comprenant un code de programme à exécuter par au moins une unité de traitement d'une passerelle de dispositif, dans lequel l'exécution du code de programme amène l'au moins unité de traitement à exécuter un procédé selon la revendication 2.
